# EUROPÄISCHE PATENTSCHRIFT

(11) **EP 2 325 260 B1**
(45) Veröffentlichungstag und Bekanntmachung des Hinweises auf die Patenterteilung: **27.04.2016**
(21) Anmeldenummer: 09176752.5
(22) Anmeldetag: 23.11.2009
(51) Int. Cl.: C08L 77/06, C08G 69/26

(54) **Teilaromatische Formmassen und deren Verwendungen**
Semi-aromatic moulding masses and their applications
Compositions de moulage partiellement aromatiques et leurs utilisations

(43) Veröffentlichungstag der Anmeldung: 25.05.2011
(73) Patentinhaber: EMS-PATENT AG, 7013 Domat/Ems (CH)
(72) Erfinder: Hewel, Manfred, Dr., 7013 Domat/Ems (CH); Hoffmann, Botho, 7013 Domat/Ems (CH); Bayer, Andreas, 7013 Domat/Ems (CH)
(74) Vertreter: Bremi, Tobias Hans

(56) Entgegenhaltungen:
- EP-A1- 1 988 113
- EP-A2- 1 505 099
- WO-A1-98/11398

## Beschreibung

### TECHNISCHES GEBIET

Die vorliegende Erfindung betrifft Polyamid-Formmassen auf Basis eines Terephthalsäure-Copolyamids sowie Verfahren zu deren Herstellung und Verwendungen davon.

### STAND DER TECHNIK

Bekannte Standardpolyamide wie PA6 und PA66 lassen sich leicht verarbeiten, haben hohe Schmelzpunkte und hohe Wärmeformbeständigkeiten, insbesondere wenn sie mit Glasfasern verstärkt sind oder mineralische Füllstoffe enthalten. Allerdings haben sie typischerweise hohe Wasseraufnahmen von bis zu 10% bei Lagerung in Wasser. Für viele Anwendungen mit hohen Anforderungen an die Dimensionsstabilität auch unter nassen oder feuchten Bedingungen können diese aliphatischen Polyamide nicht eingesetzt werden. Mit der Wasseraufnahme verändern sich nicht nur die Dimensionen, sondern auch die mechanischen Eigenschaften. Die Steifigkeiten und die Festigkeiten werden durch die Wasseraufnahme um ein Mehrfaches reduziert. Bei Anwendungen mit mechanischer Belastung in Kontakt mit Wasser oder Umgebungsfeuchte ist der Einsatz der Standardpolyamide in solchen Anwendungen mit anderen Worten problematisch.

Langkettige aliphatische Polyamide aus Aminoundecansäure (PA11) oder Laurinlactam (PA12) oder aus Dodecandiamin und Dodecandisäure (PA1212) haben zwar eine niedrige Wasseraufnahme aber unerwünscht tiefe Schmelzpunkte unter 200°C. Modul und Festigkeit von PA11, PA12 und PA1212 sind bereits in trockenem Zustand tief. Sie sind für technische Anwendungen bei höheren Temperaturen nicht geeignet.

Aus der EP-A-1 505 099 sind Formmassen für medienführende Leitungen bekannt, enthaltend ein teilaromatisches Polyamid, spezifisch basierend auf einem aliphatischen Diamin mit 8 bis 20 C-Atomen, auf einer aromatischen Dicarbonsäure wie z.B. Terephthalsäure sowie auf Laktam-12 oder Aminoundecansäure, oder auf Kondensationsprodukt eines Diamins mit einer aliphatischen Disäure oder mit Isophthalsäure. Zusätzlich enthält die Formmasse mindestens ein Additiv, Nanofüllstoff, Weichmacher oder (vernetztes) Polyolefin. Spezifisch genannt werden Systeme wie PA 11/10T und PA 1010/10T (mit T für Terephthalsäure) mit einem Weichmacher (BBSA) und als Polyolefin ein sogenannter Cocktail LT. Die in den Beispielen gearbeiteten Formmasse verursachen bereits nach kurzer Extrusionsdauer hartnäckige Ablagerungen an Schnecke und Rohrkopf. Zudem weisen diese Formmassen eine immer noch zu hohe Wasseraufnahme auf.

Weiter beschreibt die EP-A-1 710 482 Mehrschichtrohre, deren Innenschicht aus teilaromatischen Polyamiden, basierend auf C9-13 Diaminen, besteht. In den Beispielen gearbeitet werden die Polyamide 9T, 9N, 12T und 12N (mit N für Naphthalamid).

Aus der EP-A-1 988 113 sind Copolyamide auf Basis von PA 10T/6T insbesondere für die Herstellung von thermoplastisch verarbeitbaren Formartikeln, wie beispielsweise Gehäuse für wasserführende Bauteile etc. Auch hier stellt sich das Problem, dass die in den Beispielen gearbeiteten Formmassen bereits nach kurzer Extrusionsdauer Ablagerungen an Schnecke und Rohrkopf bilden können.

### DARSTELLUNG DER ERFINDUNG

Es ist entsprechend Aufgabe der vorliegenden Erfindung, eine Polyamid-Formmasse zur Verfügung zu stellen, welche sich insbesondere (aber nicht ausschließlich) zur Herstellung von Behältern, Profilen oder fluidführenden Leitungen im Automobilbereich eignet, beispielsweise für Kraftstoffleitungen, Kühlleitungen, Ölleitungen, Harnstoffleitungen Solche Leitungen müssen spezifischen mechanischen Anforderungen gerecht werden, dies sowohl in definierten großen Temperaturbereichen als auch unter bestimmter chemischer Belastung.

Zudem ist es Aufgabe der vorliegenden Erfindung, eine solche Formmasse zur Verfügung zu stellen, welche nicht nur die vorgegebenen mechanischen Anforderungen erfüllt, sondern auch ohne Probleme in einem Extrusionsverfahren verarbeitet werden kann. Tatsächlich zeigt es sich nämlich, dass unter anderem die aus dem oben erwähnten Stand der Technik bekannten Extrusionsmaterialien zwar grundsätzlich durch Extrusion zu Rohren oder Profilen verarbeitet werden können, sie haben aber den gravierenden und für die Praxistauglichkeit entscheidenden Nachteil, dass sie bei den erforderlichen hohen Verarbeitungstemperaturen bei der industriellen Produktion zu hartnäckigen Ablagerungen im Extruder, insbesondere an der Schnecke und im Austragskopf, führen, die mit üblichen Spül- und Reinigungsmitteln nicht entfernbar sind. Zudem kann die Extrusion nur in einem sehr engen Temperaturbereich ausgeführt werden, will man kompakte und nicht geschäumte Rohre erhalten. Des Weitern führt ein Unterbruch bei der Extrusionsverarbeitung zum Aufschäumen der Formmasse. Nach Wiederaufnahme des Extrusionsprozesses muss bei Verwendung der Materialien nach dem Stand der Technik sehr lange gespült werden, bis wieder kompakte Rohre genügender Qualität hergestellt werden können. Das bedeutet, dass in diesem Fall grosse Abfallmengen anfallen, was den Extrusionsprozess technisch unbefriedigend macht. Daher sind diese Formmassen weitgehend nicht für die Extrusionsverarbeitung geeignet. Hier greift die Erfindung ein.

Spezifisch betrifft die vorliegende Erfindung eine Polyamid-Formmasse mit folgender Zusammensetzung:
(a) 40 - 90 Gew.-% eines Copolyamids, wobei dieses aufgebaut ist aus
   (a1) 1,6-Hexandiamin und 1,10-Dekandiamin sowie
   (a2) Terephthalsäure und mindestens einem weiteren polyamidbildenden

   Monomeren ausgewählt aus der Gruppe: Isophthalsäure (IPS), Naphthalindicarbonsäure (NDS), Korksäure (C8), Azelainsäure (C9), Sebazinsäure (C10), Undecandisäure (C11) Dodecandisäure (C12), Brassylsäure (C13), Tetradecandisäure (C14), Pentadecandisäure (C15), Hexadecandisäure (C16), Heptadecandisäure (C17), Octadecandisäure (C18), cis- und/oder trans-Cyclohexan-1,4-dicarbonsäure, cis- und/oder trans-Cyclohexan-1,3-dicarbonsäure (CHDA) und/oder Mischungen davon;
(b) 10 - 40 Gew.-% makromolekulare Weichmacher, in Form von Polyolefin Homopolymeren oder Polyolefin Copolymeren mit der Maßgabe, dass diese teilweise durch niedermolekulare Weichmachers ausgewählt aus der Gruppe: p-Hydroxybenzoesäure-octylester, Benzolsulfonsäureamid, Benzolsulfonsäure-N-alkylamide, wobei die Alkylreste insgesamt 1 bis 20 C-Atome tragen, Toluolsulfonsäureamid, Toluolsulfonsäure-N-alkylamide, wobei die Alkylgruppen 1 bis 20 C-Atome enthalten und/oder Mischungen davon ersetzt sein können;
(c) 0 - 20 Gew.-% Additive und/oder Zusatzstoffe.

Es zeigt sich, dass durch diese spezielle Auswahl einerseits die mechanischen Anforderungen, wie sie beispielsweise für Flüssigkeitsleitungen im Automobilbereich vorgegeben werden, erfüllen kann (z.B. der Kälteschlag gemäss VW TL 52435 wird von allen Beispielen ohne Bruch bestanden), andererseits aber auch der Herstellungsprozess von solchen Leitungen in einem Extrusionsverfahren problemlos durchgeführt werden kann, das heißt die oben erwähnten Nachteile treten beim Herstellungsverfahren nicht auf. Insbesondere führen sie bei den niedrigeren erforderlichen Verarbeitungstemperaturen nicht zu den nach dem Stand der Technik auftretenden hartnäckigen Ablagerungen im Extruder, insbesondere an der Schnecke und im Austragskopf. Zudem kann die Extrusion in einem weiteren Temperaturbereich ausgeführt werden, wobei man kompakte und nicht geschäumte Rohre erhält. Des Weitem führt ein Unterbruch bei der Extrusionsverarbeitung nicht zum Aufschäumen der Formmasse im Extruder und im Rohrkopf (Extrusionswerkzeug). Nach Wiederanfahren des Extruders muss zudem nicht, wie bei der Verwendung von Materialien nach dem Stand der Technik, gespült werden, bis wieder kompakte Rohre hergestellt werden können und es fallen entsprechend auch keine großen Abfallmengen an, die den Extrusionsprozess unrentabel machen können.

Gemäß einer ersten bevorzugten Ausführungsform der vorgeschlagenen Polyamid-Formmasse ist diese dadurch gekennzeichnet, dass innerhalb von (a1) der Anteil von 1,6-Hexandiamin 10 - 40 mol-% und der Anteil von 1,10-Dekandiamin 60 - 90 mol-% ausmacht, und dass innerhalb von (a2) der Anteil an Terephthalsäure 60 - 90 mol-% ausmacht, und der Anteil an weiteren polyamidbildenden Monomeren 10 - 40 mol-% ausmacht, wobei vorzugsweise innerhalb von (a1) der Anteil von 1,6-Hexandiamin 15 - 35 mol-% und der Anteil von 1,10-Dekandiamin 65 - 85 mol-% ausmacht, und innerhalb von (a2) der Anteil an Terephthalsäure 65 - 85 mol-% ausmacht, und der Anteil an weiteren polyamidbildenden Monomeren 15 - 35 mol-% ausmacht.

Eine etwas spezifischere Ausführungsform ist dadurch gekennzeichnet, dass innerhalb von (a1) der Anteil von 1,6-Hexandiamin 15 - 30 oder 15 - 25 mol-% und der Anteil von 1,10-Dekandiamin 70 - 85 oder 75 - 85 mol-% ausmacht, und dass innerhalb von (a2) der Anteil an Terephthalsäure 75 - 85 mol-% ausmacht, und der Anteil an weiteren polyamidbildenden Monomeren 15 - 25 mol-% ausmacht, wobei die weiteren polyamidbildenden Monomere ausgewählt sind aus der Gruppe: Isophthalsäure (IPS), Naphthalindicarbonsäure (NDS), Korksäure (C8), Azelainsäure (C9), Sebazinsäure (C10), Undecandisäure (C11), Dodecandisäure (C12), Brassylsäure (C13), Tetradecandisäure (C14), Pentadecandisäure (C15), Hexadecandisäure (C16), Heptadecandisäure (C17), Octadecandisäure (C18), cis- und/oder trans-Cyclohexan-1,4-dicarbonsäure, cis- und/oder trans-Cyclohexan 1,3-dicarbonsäure (CHDA), und/oder Mischungen davon. Besonders bevorzugt ist dabei die Dicarbonsäure mit 8 - 18 Kohlenstoffatomen ausgewählt aus der Gruppe Isophthalsäure, Sebazinsäure (C10), Undecandisäure (C11) und Dodecandisäure (C12), wobei Letztere insbesondere bevorzugt ist, weil sie eine hervorragende Kombination von mechanischen Eigenschaften und Verarbeitungseigenschaften zeigt.

Hinsichtlich Copolyamid Komponente wird bevorzugt, dass der Anteil von (a) im Bereich von 60 - 85 Gew.-% liegt, bevorzugt im Bereich von 64 - 80 Gew.-%.

Hinsichtlich Additiv Komponente wird bevorzugt, dass der Anteil (c) im Bereich von 0.5 - 5.0 Gew.-% liegt, insbesondere vorzugsweise im Bereich von 0.8 - 3.0 Gew.-%.

Hinsichtlich Weichmacher Komponente wird bevorzugt, dass der Anteil von (b) im Bereich von 15 - 35 Gew.-% liegt, bevorzugt im Bereich von 20 - 35 Gew.-%, insbesondere bevorzugt im Bereich von 22 - 33 Gew.-%.

Was den Weichmacher-Anteil angeht, so erweist es sich als insbesondere vorteilhaft, wenn der Anteil (b) sich im wesentlichen zusammensetzt aus
(b1) makromolekularem Weichmacher in einem Anteil von 10 - 35 Gew.-%, vorzugsweise in einem Anteil von 20 - 35 Gew.-%, insbesondere vorzugsweise in einem Anteil von 22 - 33 Gew.-%, und
(b2) niedermolekularem Weichmacher in einem Anteil von 5 - 20 Gew.-%, vorzugsweise in einem Anteil von 5 - 15 Gew.-%, insbesondere vorzugsweise in einem Anteil von 7 - 15 Gew.-%.

Gemäß einer anderen bevorzugten Ausführungsform erweist es sich hinsichtlich des Weichmacheranteils als vorteilhaft, wenn der Anteil (b) ausschließlich durch makromolekularen Weichmacher in einem Anteil von 10 - 40 Gew.-%, vorzugsweise in einem Anteil von 15 - 35 Gew.-%, insbesondere vorzugsweise in einem Anteil von 22 - 33 Gew.-% gebildet wird.

Wie bereits eingangs erwähnt ist die Verarbeitungstemperatur für die geeignete Verarbeitung entscheidend. Die Formmassen gemäß der vorliegenden Erfindung zeigen eine niedrigere Verarbeitungstemperatur, was unter anderem die Probleme bei der Herstellung unter Verwendung der Materialien des Standes der Technik vermeidet. Insbesondere sind entsprechend die Komponenten der verschiedenen Anteile (a) - (c) so gewählt, dass die Polyamid-Formmasse einen Schmelzpunkt von weniger als 275 °C oder von weniger als 270°C, vorzugsweise von höchstens 265 °C aufweist. Insbesondere bevorzugt liegt der Schmelzpunkt im Bereich von 240 - 270 °C, weiterhin bevorzugt im Bereich von 250 - 265 °C.

Weiterhin verfügt eine solche Polyamid-Formmasse über eine hervorragende niedrige Wasseraufnahme, typischerweise verfügt sie über eine Wasseraufnahme bei 95 °C und 336 h von höchstens 3,5 %, vorzugsweise von höchstens 3 %.

Zudem verfügt die Polyamid-Formmasse nach der Erfindung über eine herausragende Reissdehnung. So spezifisch verfügt sie typischerweise über eine Reissdehnung, gemessen an Zugstäben, von wenigstens 5 %.

Auch hinsichtlich Zug-Eigenschaften erweist sich die Polyamid-Formmasse nach der Erfindung als besonders geeignet, so zeigen Formteile aus der Polyamid-Formmasse ein Zug-E-Modul typischerweise im Bereich von 400-1600 MPa, vorzugsweise im Bereich von 500-1500 MPa.

Eine ganz spezifische und besonders geeignete Ausführungsform ist durch folgende Merkmalskombination gekennzeichnet: die Polyamid-Formmasse ist aufgebaut aus
(a) 64 - 80 Gew.-% eines Copolyamids aufgebaut aus
   (a1) 15 - 25 mol-% 1,6-Hexandiamin und 75 - 85 mol-% 1,10 Dekandiamin,
   (a2) 75 - 85 mol-% Terephthalsäure und 15 - 25 mol-% Dodekandisäure,
(b) 15 - 35 Gew.-% eines makromolekularen Weichmachers basierend auf g-MAH Ethylen-Propylen-Copolymer, gegebenenfalls bis zur Hälfte ersetzt durch einen niedermolekularen Weichmacher, insbesondere auf Basis eines Benzolsulfonsäure-N-alkylamids
(c) 0.8 - 3.0 Gew.-% Additive.

Die erfindungsgemässe Formasse enthält 10 bis 40 Gew.-% Weichmacher, wobei makromolekulare Weichmacher bevorzugt werden. Es können aber auch Mischungen aus makromolekularen und niedermolekularen Weichmachern eingesetzt werden.

Hinsichtlich der Weichmacher-Komponente gilt generell, dass der makromolekulare Weichmacher ein Polyolefin Homopolymeres oder Polyolefin Copolymeres ist, vorzugsweise ausgewählt aus der Gruppe Ethylen-α-Olefin-Copolymer, Terpolymer auf Basis von Ethylen-C3-12-α-Olefin mit einem unkonjugierten Dien, Ethylen-Acrylat-Copolymer, Ethylen-Butylen-Copolymer, und/oder Mischungen davon, wobei der makromolekulare Weichmacher vorzugsweise über Bestandteile mit Säureanhydridgruppen, insbesondere in Form eines Pfropf-Maleinsäureanhydrids (g-MAH) verfügt, wobei der makromolekulare Weichmacher insbesondere bevorzugt ausgewählt ist als Maleinsäureanhydrid-modifiziertes Ethylen-Propylen-Copolymer.

Gemäss einer weiteren bevorzugten Ausführungsform sind die erfindungsgemässen Formmassen also dadurch gekennzeichnet, dass die Komponente (b) ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12-α-Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente C um Ethylen-Propylen-Kautschuk und/oder LLDPE und/oder VLDPE handelt.

Alternativ oder zusätzlich (beispielsweise in Mischung) kann (b) ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1)heptadien, Hexadien-1.4-Dicyclopentadien und/oder insbesondere 5-Ethylidennorbornen.

In Frage als Bestandteil für die Komponente (b) kommen zudem auch Ethylen-AcrylatCopolymere.

Weitere mögliche Formen als Bestandteile für die Komponente (b) sind die Ethylen-Butylen-Copolymere beziehungsweise Mischungen (Blends), welche derartige Systeme enthalten.

Bevorzugtermassen verfügt die Komponente (b) über Bestandteile mit Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid. Vorzugsweise werden 0.1 bis 4.0 Gew.-% eines ungesättigten Anhydrids an die Komponente (b) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0%, insbesondere bevorzugt in einem Bereich von 0.3-0.7%. Auch möglich als Bestandteil der Komponente (b) ist eine Mischung, z.B. aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7%.

Die oben angegebenen möglichen Systeme für die Komponente können auch in Mischungen verwendet werden.

Weiterhin kann die Komponente (b) über Bestandteile verfügen, welche funktionelle Gruppen, wie z.B. Carbonsäure-, Ester-, Epoxy-, Oxazolin-, Carbodiimid-, Isocyanat-, Silanol- und Carboxylat-Gruppen aufweisen, oder Kombinationen von zwei oder mehreren der genannten funktionellen Gruppen enthalten. Monomere, die diese funktionellen Gruppen tragen, können durch Co-Polymerisation oder Pfropfung an das elastomere Polyolefin gebunden werden.

Ausserdem können die makromolekularen Weichmacher auf Basis der Olefinpolymere auch durch Pfropfung mit einer ungesättigten Silanverbindung, z. B. Vinyltrimethoxysilan, Vinyltriethoxysilan, Vinyltriacetosilan, Methacryloxypropyltrimethoxysilan oder Propenyltrimethoxysilan modifiziert sein.

Die elastomeren Polyolefine sind vorzugsweise statistische, alternierende oder segmentierte Copolymere mit linearer, verzweigter oder Core-Shell-Struktur und enthalten funktionelle Gruppen, die mit den Endgruppen der Polyamide reagieren können, so dass eine ausreichende Verträglichkeit zwischen Polyamid und makromolekularem Weichmacher resultiert.

Die erfindungsgemässen makromolekularen Weichmacher schliessen damit generell Homopolymere oder Copolymere von Olefinen, wie z.B. Ethylen, Propylen, Buten-1, oder Copolymere von Olefinen und copolymerisierbaren Monomeren, wie Vinylacetat, (Meth)acrylsäureester und Methylhexadien, ein.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylene-Propylen-Dien-Terpolymere sowie Kombinationen der genannten Polymere.

Beispiele für kommerziell erhältliche makromolekulare Weichmacher, welche im Rahmen der Bestandteile der Komponente (b) eingesetzt werden können, sind:
TAFMER MC201: g-MAH (-0.6 %) Blend aus 67% EP Copolymer (20 Mol-% Propylen) + 33 % EB Copolymer (15mol-% Buten-1)): Mitsui Chemicals, Japan.
TAFMER MH5010: g-MAH (-0.6 %) Ethylen-Butylen-Copolymer; Mitsui.
TAFMER MH7010: g-MAH (-0.7 %) Ethylen-Butylen-Copolymer; Mitsui.
TAFMER MH7020: g-MAH (-0.7 %) EP-Copolymer, Mitsui.
EXXELOR VA1801: g-MAH (-0.7 %) EP-Copolymer; Exxon Mobile Chemical, US.
EXXELOR VA1803: g-MAH (0.5-0.9 %) EP Copolymer, amorph,, Exxon.
EXXELOR VA1810: g-MAH (-0.5 %) EP-Copolymer, Exxon
EXXELOR MDEX 94-1 1: g-MAH (0.7 %) EPDM, Exxon.
FUSABOND MN493D: g-MAH (-0.5 %) Ethylen-Octen-Copolymer, DuPont, US.
FUSABOND A EB560D (g-MAH) Ethylen-n-butyl-acrylat-copolymer, DuPont. ELVALOY, DuPont.

Bevorzugt wird auch ein Ionomer, in welchem die polymergebundenen Carboxylgruppen ganz oder teilweise durch Metallionen miteinander verbunden sind.

Bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

Bevorzugt enthalten die erfindungsgemässen makromolekularen Weichmacher, (Komponente (b1)) keine Acrylate oder Methacrylate als Monomerbaustein.

Besonders bevorzugt werden als makromolekulare Weichmacher MAH-modifizierte Ethylen-Propylen-Copolymere eingesetzt.

Im Rahmen der vorliegenden Erfindung werden gegebenenfalls zusätzlich zu den makromolekularen auch niedermolekulare Weichmacher eingesetzt. Die Konzentration der niedermolekularen Weichmacher beträgt dann - bezogen auf die Formmasse - 5 bis 20, bevorzugt 5 bis 15 und besonders bevorzugt 7 bis 15 Gew.-%.

Dabei ist der niedermolekulare Weichmacher ausgewählt aus der Gruppe: p-Hydroxybenzoesäure-octylester, Benzolsulfonsäureamid, Benzolsulfonsäure-N-alkylamide, wobei die Alkylreste insgesamt 1 bis 20 C-Atome tragen, (vorzugsweise Benzolsulfonsäure-N-butylamid, Benzolsulfonsäure-N-octylamid, Benzolsulfonsäure-N-cyclohexylamid), Toluolsulfonsäureamid, Toluolsulfonsäure-N-alkylamide, wobei die Alkylgruppen 1 bis 20 C-Atome enthalten, vorzugsweise Toluolsulfonsäure-N-ethylamid. Die genannten Systeme können einzeln oder in Mischungen eingesetzt werden. Besonders bevorzugt ist eine Mischung aus Benzolsulfonsäure-N-alkylamid und p-Toluolsulfonsäureamid.

Hinsichtlich Additiv-Komponente (Komponente (c)) ist diese bevorzugtermassen dadurch gekennzeichnet, dass das Additiv respektive die Zusatzstoffe (beispielsweise weiteres Polymer) ausgewählt sind aus der Gruppe: Kristallisations-Beschleuniger oder - Verzögerer, Fliesshilfsmittel, Gleitmittel, Entformungsmittel, Pigmente, Farbstoff- und Markierungsstoffe, Stabilisatoren, Verarbeitungshilfsmittel, Antistatika, Nanoteilchen in Plättchenform, Leitfähigkeitsadditive, wie Russ, Graphitpulver oder Kohlenstoffnanofibrillen, Flammschutzmittel, insbesondere halogenfreie Flammschutzmittel, wie insbesondere auf Basis von Phosphinsäuresalzen, Residuen aus Polymerisationsverfahren wie Katalysatoren, Salze und deren Derivate, sowie Regler wie Monosäuren, Monoamine.

Die erfindungsgemässen Copolyamide können auf für Polyamide üblichen Polykondensationsanlagen im Batchprozess oder über die Prozessfolge Vorkondensat und Nachkondensation hergestellt werden. Für die Polykondensation werden zur Regelung der Viskosität bevorzugt Kettenregler eingesetzt. Als Kettenregler eignen sich Monoamine oder Monosäuren wie Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)propylamin, Methylcyclohexylamin, Dimethylcyclohexylamin, Benzylamin, 2-Phenylethylamin, Zusätzlich kann die Viskosität durch den Einsatz eines Diamin- oder Disäureüberschusses eingestellt werden.

Damit die Salzlösungen bei den Lösertemperaturen von 180 bis 230°C homogen und klar sind, werden zu den Monomeren üblicherweise 20 bis 30% Wasser zugesetzt. Zur Verhinderung übermässigen Schäumens beim Entspannen und Entgasen wird den Ansätzen vorzugsweise ein Antischaummittel zugesetzt. Als Antischaummittel eignen sich wässrige Silikonemulsionen, Polydimethylsiloxan auf einem festen Träger, wie z.B. Zeolith, wasserfreies, hochmolekulares Polysiloxan oder Siloxane in organischen, wasserlöslichen Lösungsmitteln in einer Menge von 0.01 bis 0.5 Gewichts-%.

Als Polykondensationskatalysatoren werden den Monomermischungen vorzugsweise 0.005 bis 1.5 Gewichts-% Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z.B. Na, K, Mg, Ca, Zn oder Al und/oder deren Ester wie z.B. Triphenylphosphat, Triphenylphosphit oder Tris-(nonylphenyl)-phosphit zugesetzt. Bevorzugt sind hypophosphorige Säure und Natriumhydrogenhypophosphit Monohydrat in einer Menge von 100 bis 500 ppm Phosphor bezogen auf das Copolyamid. Grundsätzlich kann die Polyamid-Formmasse in Form eines Granulates oder eines Pulvers vorliegen, oder aber auch als Halbzeug oder Stäbchengranulat, wobei diese faserverstärkt sein können, insbesondere unter Verwendung von Fasern aus Glas, Kohlenstoff anderen Kunststoffen.

Des weiteren betrifft die vorliegende Erfindung Formkörper hergestellt aus einer Polyamid-Formmasse, wie sie oben beschrieben ist. Bei den Formköipern kann es sich beispielsweise um Profile, Gehäusebestandteile oder Flüssigkeiten respektive Gase (Fluid-) führende Bauteile handeln, insbesondere aus dem Automobilbereich. Vorzugsweise handelt es sich um Formkörper in Form eines Flüssigkeitsbehälters oder einer Flüssigkeitsleitung insbesondere für den Automobilbereich zur Führung von Flüssigkeiten wie bevorzugtermassen Kraftstoffen, Kühlmitteln, Harnstofflösungen und/oder Ölen. Besonders bevorzugt handelt es sich bei den Formkörper um Kraftstoffleitungen (Benzinleitungen, Dieselleitungen), Kühlleitungen, Ölleitungen oder Harnstoffleitungen. Im Falle einer Rohrleitung verfügt diese vorzugsweise über eine Reissdehnung von wenigstens 100 %. Solche Behälter respektive Leitungen können als Einschichtstruktur (das heißt die Wandung wird ausschließlich aus einer Schicht bestehend aus der Polyamid-Formmasse gebildet) oder als Mehrschichtstruktur aufgebaut sein, wobei im letzteren Falle wenigstens eine der Schichten aus der genannten Polyamid-Formmasse besteht.

Zudem betrifft die vorliegende Erfindung den Einsatz von solchen Polyamid-Formmassen in Extrusionsprozessen. Spezifisch betrifft sie bevorzugtermassen ein Verfahren zur Herstellung eines Formkörpers, beispielsweise wie er oben beschrieben wird, welches dadurch gekennzeichnet ist, dass in einem Extrusionsverfahren, vorzugsweise unter Verwendung eines Schneckenextruders typischerweise bei einer Zylindertemperatur im Bereich von 280 - 320 °C, der Formkörper hergestellt wird, insbesondere bevorzugt zu einer Rohrleitung.

Weitere Ausführungsformen sind in den abhängigen Ansprüchen angegeben.

### BESCHREIBUNG BEVORZUGTER AUSFÜHRUNGSFORMEN

Die Erfindung soll nachfolgend unter Zuhilfenahme von spezifischen Beispielen näher erläutert werden. Die in der Folge vorgestellte Beispiele dienen der Stützung des in den Ansprüchen formulierten Schutzbegehrens und dazu, die Durchführbarkeit zu dokumentieren. Die Beispiele sollen nicht dafür hinzugezogen werden, die Ansprüche einschränkend auszulegen.

Herstellung der Copolyamide CoPA-1 bis CoPA-5:
Batchverfahren: In einem Batchverfahren werden die in Tabelle 1 angegebenen Systeme CoPA-1 bis CoPA-3 und CoPA-5 hergestellt, wobei die Aufbereitung der in der Tabelle angegebenen Reaktionsmischungen in einem 300 1 Autoklaven mit vorgeschaltetem Lösegefäss (Löser) erfolgt.

**Tabelle 1: Copolyamide, Komponente (a)**

| Zusammensetzung | Einheit | CoPA-1 | CoPA-2 | CoPA-3 | CoPA-4 | CoPA-5 |
|---|---|---|---|---|---|---|
| 1.6-Hexandiamin | Gew.-Teile | 5.372 | 7.535 | 5.430 | 4.4869 | |
| 1,10-Decandiamin | Gew.-Teile | 30.443 | 28.830 | 34.846 | 30.7045 | 28.830 |
| Terephthalsäure | Gew.-Teile | 27.430 | 25.503 | 22.463 | 33.9772 | 25.503 |
| Sebazinsäure | Gew.-Teile | | | 15.945 | | |
| Dodecandisäure | Gew.-Teile | 9.951 | 14.934 | | | |
| Aminoundecansäure | Gew.-Teile | | | | | 22.469 |
| Eigenschaften | | | | | | |
| Lösungsviskosität | | 1.77 | 1.73 | 1.83 | 1.62 | 1.78 |
| COOH-Endgruppen | mmol/kg | 38 | 14 | 27 | 41 | 12 |
| NH2-Endgruppen | mmol/kg | 58 | 86 | 81 | 105 | 102 |
| Schmelzpunkt | °C | 260 | 245 | 249 | 295 | 255 |
| Schmelzenthalpie | J/g | 50 | 42 | 41 | 53 | 47 |
| Glasübergangstemperatur | °C | 92 | 85 | 77 | 119 | 82 |
| Wasseraufnahme | % | 2.9 | 3.0 | 3.0 | 2.7 | 2.7 |
| Zug-E-Modul | MPa | 2800 | 2200 | 2500 | 2900 | 2200 |
| Reissfestigkeit | MPa | 87 | 73 | 77 | 80 | 64 |
| Reissdehnung | % | 6.5 | 5.3 | 14 | 3.9 | 3.6 |
| Schlagzähigkeit | kJ/m² | o.B. | 40 | 45 | 70 | 38 |
| Kerbschlagzähigkeit | kJ/m² | 5.5 | 4.9 | 4.4 | 5.9 | 4.3 |

Die Rezepturkomponenten werden in den Löser zusammen mit Regler, Antischaummittel und Wasser eingefüllt und unter Rühren auf eine Temperatur von ca. 200°C bis 230°C erwärmt, wobei ein Druck von 2 bis 20 bar resultiert. Die Löserzeit beträgt insgesamt 5 bis 9 Stunden.

Danach wird der Löserinhalt in den Autoklaven überführt und unter Druck auf eine Temperatur im Bereich von 280 bis 310°C bei gleichzeitigem Druckaufbau von 2 bis 30 bar erwärmt. Die Druckphase wird für einen Zeitraum von 1 bis 2 Stunden aufrechterhalten. Die Druckphase reduziert den unerwünschten Verlust an flüchtigen Monomerbestandteilen in der Anfangsstufe des Polymeraufbaues. Im Anschluss an die Druckphase wird langsam und stufenweise entspannt. Beim Erreichen von Atmosphärendruck wird kontinuierlich Stickstoff über die Schmelze geleitet. Während der Druck- und der anschliessenden Entgasungsphase wird die Schmelze kontinuierlich gerührt. In der Entgasungs- und Polykondensationsphase wird eine Schmelzetemperatur von ca. 290°C bis 310°C eingehalten.

Die Schmelzeaufbereitung und die Kondensation erfolgen im Autoklaven unter Inertgasatmosphäre, insbesondere unter Überleiten von Stickstoff; auch Wasserdampf kann z.B. während der Druckphase ganz oder teilweise die Inertgasatmosphäre bilden.

Nach der Entgasungsphase wird das Copolyamid über eine Schmelzepumpe als Strang ausgetragen, in einem Wasserbad abgekühlt, granuliert und anschliessend 24 Stunden bei 100°C und reduziertem Druck getrocknet.

Die Herstellung von CoPA-4 erfolgt über ein Vorkondensat und anschliessende Nachkondensation. Die Rezepturkomponenten gemäss Tabelle 1, werden zusammen mit Katalysator, Regler und Wasser in einen 201-Autoklaven gegeben, innerhalb von 50 bis 80 Minuten (der Aufheizzeit) auf eine Produkttemperatur von 260°C aufgeheizt, für eine Stunde auf einem Druck von 32 bar gehalten und anschliessend über eine Düse ausgetragen. Das Vorkondensat wird 24 Stunden bei 120°C und einem Vakuum von 30 mbar getrocknet.

Das so erhaltene CoPA-Vorkondensat wird in einem zweiwelligen Extruder der Firma Werner und Pfleiderer mit einem Schneckendurchmesser von 25 mm bei vorgegebenen Prozessparametern (Zylindertemperatur: 340°C, Schneckendrehzahl: 150 Upm, Durchsatz: 4 kg/h) nachkondensiert. Die Schmelze wird in Zone 10 durch einen Stickstoffstrom entgast. Das Produkt wird als Strang aus einer Düse mit 3 mm Durchmesser abgezogen und granuliert. Das Granulat wird 24 Stunden bei 100°C im Vakuum von 30 mbar getrocknet.

**Tabelle 2: Polyamid-Formmasse**

| Beispiele 1 - 6 (B1-B6) und Vergleichsbeispiele 1 und 2 (VB1, VB2) | | | | | | | | | |
|---|---|---|---|---|---|---|---|---|---|
| Beispiele | Einheit | VB1 | VB2 | B1 | B2 | B3 | B4 | B5 | B6 |
| CoPA-1 | Gew.-% | | | 77.15 | 69.65 | 72.65 | 64.65 | | |
| CoPA-2 | Gew.-% | | | | | | | 77.15 | |
| CoPA-3 | Gew.-% | | | | | | | | 77.15 |
| CoPA-4 | Gew.-% | | 77.15 | | | | | | |
| CoPA-5 | Gew.-% | 64.65 | | | | | | | |
| Tafmer MH-7020 | Gew.-% | | 22.50 | 22.50 | 17.00 | 27.00 | 35 | 22.5 | 22.5 |
| Lucalen A2920M | Gew.-% | 8.75 | | | | | | | |
| Lotader GMA AX8840 | Gew.-% | 8.75 | | | | | | | |
| Lotader 4700 | Gew.-% | 17.5 | | | | | | | |
| KJ-Calciumstearat (98:2) | Gew.-% | 0.30 | 0.30 | 0.30 | 0.30 | 0.30 | 0.30 | 0.30 | 0.30 |
| Kupfer(I)iodid | Gew.-% | 0.05 | 0.05 | 0.05 | 0.05 | 0.05 | 0.05 | 0.05 | 0.05 |
| BBSA | Gew.-% | | | | 13.00 | | | | |
| **Eigenschaften** | | | | | | | | | |
| Wasseraufnahme bei 95°C (nach 336 h) | % | 5.4 | 2.9 | 3.0 | n.b. | 2.8 | 2.5 | 3.0 | 5.5 |
| Schmelzpunkt | °C | 255 | 295 | 258 | 251 | 258 | 258 | 244 | 249 |
| Zug-E-Modul | MPa | 1120 | 1500 | 1510 | 730 | 1300 | 990 | 1300 | 1500 |
| Reissfestigkeit | MPa | 36 | 44 | 45 | 36 | 40 | 31 | 40 | 44 |
| Reissdehnung | % | 70 | 73 | 26 | 150 | 30 | 65 | 48 | 43 |
| Schlagzähigkeit | kJ/m² | o.B. | o.B. | o.B. | o.B. | o.B. | o.B. | o.B. | o.B. |
| Kerbschlagzähigkeit | kJ/m² | 70 | 96 | 115 | o.B. | 90 | o.B. | 85 | 85 |
| HDT A | °C | 65 | 102 | 70 | 43 | 67 | 62 | 63 | 58 |
| HDT B | °C | 84 | 132 | 95 | 83 | 86 | 78 | 77 | 71 |

| **Rohrprüfungen** | | VB1 | VB2 | B1 | B2 | B3 | | B5 | B6 |
|---|---|---|---|---|---|---|---|---|---|
| Zugfestigkeit | MPa | 31 | 38 | 38 | 29 | 38 | | 36 | 38 |
| Reissdehnung | % | 85 | 89 | 123 | 116 | 150 | | 165 | 170 |
| Berstdruck 23°C | bar | 84 | 86 | 105 | 65 | 97 | | 92 | 95 |
| Berstdruck 130°C | bar | 17 | 35 | 24 | 18 | 22 | | 18 | 18 |
| Biegeradius | mm | 28 | 34 | 32 | 24 | 27 | | 26 | 28 |
| Ablagerungen im Rohrextruder | | -- | - | + | + | + | | + | + |
| Kompaktheit (Schaumbildung) | | + | -- | + | + | + | | + | + |
| Oberfläche (Gelpartikel) | | + | - | + | + | + | | + | + |

| | | | | | | | | | |
|---|---|---|---|---|---|---|---|---|---|
| n.b.: nicht bestimmt Legende zur Tabelle Rohiprüfungen: Ablagerungen: -- sehr starke Ablagerungen - starke Ablagerungen + keine Ablagerungen Kompaktheit: -- starkes Aufschäumen der Schmelze, geschäumtes Extrudat + kein Aufschäumen, kompaktes Extrudat Oberfläche: - deutliche Oberflächendefekte, schlechte Oberflächenqualität + gute bis sehr gute Oberflächenqualität, keine oder sehr wenige Gelpartikel Tafmer MH-7020 ist ein g-MAH (-0.7 %) EP-Copolymer erhältlich von Mitsui. Lucalen A 2920 M ist ein LDPE erhältlich von LyondellBasell Industries. LOTADER® AX8840 ist ein zufälliges Copolymer auf Basis von Ethylen und Glycidyl methacrylat (GMA) erhältlich von Arkema. LOTADER® 4700 ist ein Terpolymer auf Basis von Ethylen - Acrylester- Maleinsäureanhydrid erhältlich von Arkema. BBSA steht für n-Butylbenzolsulfonamid. | | | | | | | | | |

### 1. Compoundierung

Die Copolyamide CoPA-1 bis CoPA-5 werden in einem zweiwelligen Extruder der Firma Werner und Pfleiderer mit einem Schneckendurchmesser von 25 mm bei vorgegebenen Prozessparametern (Zylindertemperatur, Schneckendrehzahl, Durchsatz) compoundiert. Das Produkt wird als Strang aus einer Düse mit 3 mm Durchmesser abgezogen und granuliert. Das Granulat wird 24 Stunden bei 100°C getrocknet. Für die Parameter vgl. Tabelle 3.

**Tabelle 3: Parameter bei der Compoundierung**

| Parameter für Compoundierung | Einheit | B1 bis B8 und VB1 | VB2 |
|---|---|---|---|
| Zylindertemperatur | °C | 280 -310 | 330 |
| Schneckendrehzahl | UPM | 150 | 200 |
| Massetemperatur | °C | 300 - 320 | 320-340 |
| Durchsatz | kg/h | 15 | 10 |

### 2. SPG für Prüfkörper

Die Copolyamide und die Compounds aus den Beispielen und Vergleichsbeispielen werden mit einer Spritzgussmaschine Arburg Allrounder 320-210-750 zu ISO-Prüfkörper bei definierten Zylindertemperaturen der Zonen 1 bis 4 und einer definierten Werkzeugtemperatur verspritzt. Für die Parameter vgl. Tabelle 4.

**Tabelle 4: Parameter für Spritzguss**

| Parameter für Spritzguss | Einheit | B1 bis B8 und VB1 | VB2 |
|---|---|---|---|
| Zylindertemperatur Zone 1 | °C | 280 | 315 |
| Zylindertemperatur Zone 2 | °C | 285 | 320 |
| Zylindertemperatur Zone 3 | °C | 290 | 325 |
| Zylindertemperatur Zone 4 | °C | 295 | 330 |
| Werkzeugtemperatur | °C | 60 | 100 |

### 3. Rohrextrusion

Die Compounds aus den Beispielen und den Vergleichsbeispielen werden mit einem Nokia Maillefer Rohrextruder BMA 60-24D zu Rohren der Dimension 8x1 mm bei den nachfolgend angegebenen Bedingungen verarbeitet. Für die Parameter vgl. Tabelle 5.

**Tabelle 5: Parameter für Rohrextrusion**

| Parameter für Rohrextrusion | Einheit | B1 bis B8 und VB1 | VB2 |
|---|---|---|---|
| Drehzahl | UPM | 64-72 | 38 |
| Massetemperatur | °C | 300-305 | 308 |
| Abzugsgeschwindigkeit | m/min | 40 | 40 |
| Zylindertemperatur | °C | 290-300 | 290-310 |

Die Extrusion kann bei Verwendung der Materialien nach der Erfindung gänzlich ohne die eingangs geschilderten Probleme geführt werden, das heißt es traten keine Probleme im Zusammenhang mit Ablagerungen im Werkzeug auf, und es gab auch kein Aufschäumen während des Prozesses oder im Rahmen von Unterbrechungen der Prozeßführung.

Bei den Vergleichsbeispielen VB1 sowie VB2 werden bei der Führung des Prozesses im größeren Maßstab hingegen gravierende Ablagerungen im Werkzeug beobachtet und es traten Probleme bei der Prozessunterbrechung auf. Diese Materialien erweisen sich für die praktische Anwendung wegen der Probleme bei der Prozeßführung als weitgehend ungeeignet. Dabei entspricht das Vergleichsbeispiel VB1 einer Formmasse entsprechend der eingangs erwähnten EP-1 505 099, und das Vergleichsbeispiel VB2 einer Formmasse entsprechend der eingangs erwähnten EP-A-1 988 113.

Mit anderen Worten können die Probleme der Verarbeitung mit den erfindungsgemäßen Formmassen überwunden werden.

Zudem können die mechanischen Anforderungen insbesondere aus dem Bereich der Leitungen für den Automobilbereich erfüllt werden, wie sich dies aus Tabelle 2 ergibt. Sämtliche Materialien nach der Erfindung erfüllen die Erfordernisse betreffend Kälteschlag entsprechend der Norm VW TL 52435.

Die Messungen werden nach folgenden Normen und an folgenden Prüfkörpern durchgeführt.

Wasseraufnahme: Die Lagerung in Wasser erfolgt bei 95°C für eine Dauer von 336 Stunden mit Zugstäben. Zug-E-Modul: ISO 527 mit einer Zuggeschwindigkeit von 1 mm/min. ISO-Zugstab, Norm: ISO/CD 3167, Typ Al, 170 x 20110 x 4 mm, Temperatur 23 °C

Reissfestigkeit und Reissdehnung: ISO 527 mit einer Zuggeschwindigkeit von 50 mm/min (unverstärkte Varianten). ISO-Zugstab , Norm: ISO/CD 3167, Typ Al, 170 x 20/10 x 4 mm, Temperatur 23 °C.

Thermisches Verhalten (Schmelzpunkt, Schmelzenthalpie und Glasumwandlungstemperatur (Tg): ISO-Norm 11357-11-2, Granulat, die Differential Scanning Calorimetry (DSC) wird mit Aufheizrate von 20 °C/min durchgeführt. Für die Glasumwandlungstemperatur (Tg) wird die Temperatur für den Onset angegeben. Relative Viskosität: DIN EN ISO 307, in 0,5 Gew.-%-iger m-Kresollösung, Temperatur 20 °C Granulat.

Schlagzähigkeit nach Charpy: ISO 179/*eU; ISO-Prüfstab, Norm: ISO/CD 3167, Typ B1, 80 x 10 x 4 mm, Temperatur 23 °C; * 1 = nicht instrumentiert, 2 = instrumentiert. Kerbschlagzähigkeit nach Charpy: ISO 179/*eA; ISO-Prüfstab, Norm: ISO/CD 3167, Typ B1, 80 x 10 x 4 mm, Temperatur 23 °C; * 1 = nicht instrumentiert, 2 = instrumentiert HDT A (1,8 MPa) HDT B (0.45 MPa): ISO 75; ISO-Schlagstab 80x10x4.

Rohrprüfungen (Kälteschlag, Bruchspannung, Bruchdehnung): VW TL 52435; Der Kälteschlagtest wird bei -40°C mit 500g und der Zugversuch längs bei 23°C, 50% Feuchte mit 100 mm/min an 8x1 mm Rohren durchgeführt.

Berstdruck: DIN 73378; 8x1 mm Rohr.

Minimaler Biegeradius: SAE J2260, 8x1 mm Rohr.

## Patentansprüche

1. Polyamid-Formmasse mit folgender Zusammensetzung:
(a) 40 - 90 Gew.-% eines Copolyamids, wobei dieses aufgebaut ist aus
(a1) 1,6-Hexandiamin und 1,10-Dekandiamin sowie
(a2) Terephthalsäure und mindestens einem weiteren polyamidbildenden Monomeren ausgewählt aus der Gruppe: Isophthalsäure (IPS), Naphthalindicarbonsäure (NDS), Korksäure (C8), Azelainsäure (C9), Sebazinsäure (C10), Undecandisäure (C11) Dodecandisäure (C12), Brassylsäure (C13), Tetradecandisäure (C14), Pentadecandisäure (C15), Hexadecandisäure (C16), Heptadecandisäure (C17), Octadecandisäure (C18), cis- und/oder trans-Cyclohexan-1,4-dicarbonsäure, cis- und/oder trans-Cyclohexan 1,3-dicarbonsäure (CHDA)" und/oder Mischungen davon;
(b) 10 - 40 Gew.-% makromolekulare Weichmacher in Form von Polyolefin Homopolymeren oder Polyolefin Copolymeren, mit der Maßgabe, dass diese Weichmacher teilweise durch niedermolekulare Weichmacher ausgewählt aus der Gruppe: p-Hydroxybenzoesäure-octylester, Benzolsulfonsäureamid, Benzolsulfonsäure-N-alkylamide, wobei die Alkylreste insgesamt 1 bis 20 C-Atome tragen, Toluolsulfonsäureamid, Toluolsulfonsäure-N-alkylamide, wobei die Alkylgruppen 1 bis 20 C-Atome enthalten, und/oder Mischungen davon, ersetzt sein können;
(c) 0 - 20 Gew.-% Additive und/oder Zusatzstoffe.

2. Polyamid-Formmasse nach Anspruch 1, **dadurch gekennzeichnet, dass** innerhalb von (a1) der Anteil von 1,6-Hexandiamin 10 - 40 mol-% und der Anteil von 1,10-Dekandiamin 60 - 90 mol-% ausmacht, und dass innerhalb von (a2) der Anteil an Terephthalsäure 60 - 90 mol-% ausmacht, und der Anteil an weiteren polyamidbildenden Monomeren 10 - 40 mol-% ausmacht, wobei vorzugsweise innerhalb von (a1) der Anteil von 1,6-Hexandiamin 15 - 35 mol-% und der Anteil von 1,10-Dekandiamin 65 - 85 mol-% ausmacht, und innerhalb von (a2) der Anteil an Terephthalsäure 65 - 85 mol-% ausmacht, und der Anteil an weiteren polyamidbildenden Monomeren 15 - 35 mol-% ausmacht.

3. Polyamid-Formmasse nach einem der vorhergehenden Ansprüche, **dadurch gekennzeichnet, dass** innerhalb von (a1) der Anteil von 1,6-Hexandiamin 15 - 30 oder 15 - 25 mol-% und der Anteil von 1,10-Dekandiamin 70 - 85 oder 75 - 85 mol-% ausmacht, und dass innerhalb von (a2) der Anteil an Terephthalsäure 75 - 85 mol-% ausmacht, und der Anteil an weiteren polyamidbildenden Monomeren 15 - 25 mol-% ausmacht.

4. Polyamid-Formmasse nach einem der vorhergehenden Ansprüche, **dadurch gekennzeichnet, dass** die Dicarbonsäure mit 8 - 18 Kohlenstoffatomen ausgewählt ist aus der Gruppe Isophthalsäure, Sebazinsäure (C10), Undecandisäure (C11) und Dodecandisäure (C12), und wobei Letztere bevorzugt ist.

5. Polyamid-Formmasse nach einem der vorhergehenden Ansprüche, **dadurch gekennzeichnet, dass** der Anteil von (a) im Bereich von 60 - 85 Gew.-% liegt, bevorzugt im Bereich von 64 - 80 Gew.-%, und dass vorzugsweise der Anteil (c) im Bereich von 0.5 - 5.0 Gew.-% liegt, insbesondere vorzugsweise im Bereich von 0.8 - 3.0 Gew.-%.

6. Polyamid-Formmasse nach einem der vorhergehenden Ansprüche, **dadurch gekennzeichnet, dass** der Anteil von (b) im Bereich von 15 - 35 Gew.-% liegt, bevorzugt im Bereich von 20 - 35 Gew.-%, insbesondere bevorzugt im Bereich von 22 - 33 Gew.-%.

7. Polyamid-Formmasse nach einem der vorhergehenden Ansprüche, **dadurch gekennzeichnet, dass** der Anteil (b) sich zusammensetzt aus
(b1) makromolekularem Weichmacher in einem Anteil von 10 - 35 Gew.-%, vorzugsweise in einem Anteil von 15-30 Gew.-% oder von 20-35 Gew.-%" insbesondere vorzugsweise in einem Anteil von 17 - 27 Gew.-% oder von 22-33 Gew.%" und
(b2) niedermolekularem Weichmacher in einem Anteil von 5 - 20 Gew.-%, vorzugsweise in einem Anteil von 5 - 15 Gew.-%, insbesondere vorzugsweise in einem Anteil von 7 - 15 Gew.-%
oder dass der Anteil (b) ausschließlich makromolekularen Weichmacher in einem Anteil von 10 - 40 Gew.-%, vorzugsweise in einem Anteil von 15 - 35 oder 20 - 35 Gew.-%, insbesondere vorzugsweise in einem Anteil von 22 - 33 Gew.-% enthält.

8. Polyamid-Formmasse nach einem der vorhergehenden Ansprüche, **dadurch gekennzeichnet, dass** sie einen Schmelzpunkt von weniger als 275 °C oder von weniger als 270°C, vorzugsweise von höchstens 265 °C aufweist, wobei vorzugsweise der Schmelzpunkt im Bereich von 240 - 270 °C, insbesondere bevorzugt im Bereich von 250 - 265 °C liegt.

9. Polyamid-Formmasse nach einem der vorhergehenden Ansprüche, **dadurch gekennzeichnet, dass** sie eine Wasseraufnahme bei 95 °C und 336 h von höchstens 3,5 %, vorzugsweise von höchstens 3 % aufweist, und/oder eine Reißdehnung, gemessen an Zugstäben, von wenigstens 5 % aufweist, und/oder ein Zug-E-Modul im Bereich von 400 - 1600 MPa, vorzugsweise im Bereich von 500 - 1500 MPa aufweist.

10. Polyamid-Formmasse nach einem der vorhergehenden Ansprüche, **dadurch gekennzeichnet, dass** sie aufgebaut ist aus
(a) 64 - 80 Gew.-% eines Copolyamids aufgebaut aus
(a1) 15 - 25 mol-% 1,6-Hexandiamin und 75 - 85 mol-% 1,10 Dekandiamin,
(a2) 75 - 85 mol-% Terephthalsäure und 15 - 25 mol-% Dodekandisäure,
(b) 15 - 35 Gew.-% eines makromolekularen g-MAH Weichmachers basierend auf Ethylen-Propylen Copolymer, gegebenenfalls bis zur Hälfte ersetzt durch einen niedermolekularen Weichmacher, insbesondere auf Basis eines Benzolsulfonsäure-N-alkylamids
(c) 0.8 - 3.0 Gew.-% Additive.

11. Polyamid-Formmasse nach einem der vorhergehenden Ansprüche, **dadurch gekennzeichnet, dass** der makromolekulare Weichmacher ausgewählt ist aus der Gruppe Ethylen-α-Olefin-Copolymer, Terpolymer auf Basis von Ethylen-C3-12-α-Olefin mit einem unkonjugierten Dien, Ethylen-Acrylat-Copolymer, Ethylen-Butylen-Copolymer, und/oder Mischungen davon, wobei der makromolekulare Weichmacher vorzugsweise über Bestandteile mit Säureanhydridgruppen, insbesondere in Form eines Propf-Maleinsäureanhydrids (g-MAH) verfügt, wobei der makromolekulare Weichmacher insbesondere bevorzugt ausgewählt ist als Maleinsäureanhydrid-modifiziertes Ethylen-Propylen-Copolymer.

12. Polyamid-Formmasse nach einem der vorhergehenden Ansprüche, **dadurch gekennzeichnet, dass** der niedermolekulare Weichmacher ausgewählt ist aus der Gruppe: Benzolsulfonsäure-N-butylamid, Benzolsulfonsäure-N-octylamid, Benzolsulfonsäure-N-cyclohexylamid, Toluolsulfonsäure-N-ethylamid, und/oder Mischungen davon, wobei vorzugsweise Benzolsulfonsäure-N-alkylamide und p-Toluolsulfonsäureamid verwendet werden.

13. Polyamid-Formmasse nach einem der vorhergehenden Ansprüche, **dadurch gekennzeichnet, dass** das Additiv respektive die Zusatzstoffe ausgewählt sind aus der Gruppe: Kristallisations-Beschleuniger oder -Verzögerer, Fliesshilfsmittel, Gleitmittel, Entformungsmittel, Pigmente, Farbstoff- und Markierungsstoffe, Stabilisatoren, Verarbeitungshilfsmittel, Antistatika, Nanoteilchen in Plättchenform, Leitfähigkeitsadditive, wie Russ, Graphitpulver oder Kohlenstoffnanofibrillen, Flammschutzmittel, insbesondere halogenfreie Flammschutzmittel, wie insbesondere auf Basis von Phosphinsäuresalzen, Residuen aus Polymerisationsverfahren wie Katalysatoren, Salze und deren Derivate, sowie Regler wie Monosäuren, Monoamine.

14. Formkörper hergestellt aus einer Polyamid-Formmasse nach einem der vorhergehenden Ansprüche, vorzugsweise in Form eines Flüssigkeitsbehälters oder einer Flüssigkeitsleitung insbesondere für den Automobilbereich zur Führung von Flüssigkeiten wie bevorzugtermassen Kraftstoffen, Kühlmitteln, Harnstoff oder dessen Lösungen, und/oder Ölen, wobei es sich vorzugsweise um eine Rohrleitung handelt, bevorzugt mit einer Reissdehnung von wenigstens 100 %.

15. Verfahren zur Herstellung eines Formkörpers nach Anspruch 14, **dadurch gekennzeichnet, dass** in einem Extrusionsverfahren, vorzugsweise unter Verwendung eines Schneckenextruders bei einer Zylindertemperatur im Bereich von 280 - 320 °C, der Formkörper hergestellt wird, insbesondere bevorzugt zu einer Rohrleitung.

## Claims

1. Polyamide moulding composition with the following constitution:
(a) from 40 to 90% by weight of a copolyamide, where this is composed of
(a1) 1,6-hexanediamine and 1,10-decanediamine and also
(a2) terephthalic acid and at least one other polyamide-forming monomer selected from the group of: isophthalic acid (IPA), naphthalenedicarboxylic acid (NDA), suberic acid (C8), azelaic acid (C9), sebacic acid (C10), undecanedioic acid (C11), dodecanedioic acid (C12), brassylic acid (C13), tetradecanedioic acid (C14), pentadecanedioic acid (C15), hexadecanedioic acid (C16), heptadecanedioic acid (C17), octadecanedioic acid (C18), cis- and/or trans-cyclohexane-1,4-dicarboxylic acid, cis- and/or trans-cyclohexane-1,3-dicarboxylic acid (CHDA), and/or mixtures thereof;
(b) from 10 to 40% by weight of macromolecular plasticizers in the form of polyolefin homopolymers or polyolefin copolymers, with the proviso that these plasticizers can have been replaced to some extent by low-molecular-weight plasticizers selected from the group: octyl p-hydroxybenzoate, benzenesulphonamide, N-alkylbenzenesulphonamides, where the alkyl moieties bear a total of from 1 to 20 carbon atoms, toluenesulphonamide, N-alkyltoluene-sulphonamides, where the alkyl groups comprise from 1 to 20 carbon atoms;
(c) from 0 to 20% by weight of additives and/or added substances.

2. Polyamide moulding composition according to Claim 1, **characterized in that** within (a1) the proportion of 1,6-hexanediamine is from 10 to 40 mol% and the proportion of 1,10-decanediamine is from 60 to 90 mol%, and that within (a2) the proportion of terephthalic acid is from 60 to 90 mol%, and the proportion of other polyamide-forming monomers is from 10 to 40 mol%, where it is preferable that within (a1) the proportion of 1,6-hexanediamine is from 15 to 35 mol% and the proportion of 1,10-decanediamine is from 65 to 85 mol%, and that within (a2) the proportion of terephthalic acid is from 65 to 85 mol%, and the proportion of other polyamide-forming monomers is from 15 to 35 mol%.

3. Polyamide moulding composition according to any of the preceding claims, **characterized in that**, within (a1), the proportion of 1,6-hexanediamine is from 15 to 30 or from 15 to 25 mol% and the proportion of 1,10-decanediamine is from 70 to 85 or from 75 to 85 mol%, and that within (a2) the proportion of terephthalic acid is from 75 to 85 mol%, and the proportion of other polyamide-forming monomers is from 15 to 25 mol%.

4. Polyamide moulding composition according to any of the preceding claims, **characterized in that** the dicarboxylic acid has been selected from the group of isophthalic acid, sebacic acid (C10), undecanedioic acid (C11) and dodecanedioic acid (C12), and where the latter is in preferred.

5. Polyamide moulding composition according to any of the preceding claims, **characterized in that** the proportion of (a) is in the range from 60 to 85% by weight, preferably in the range from 64 to 80% by weight, and that the proportion of (c) is preferably in the range from 0.5 to 5.0% by weight, in particular in the range from 0.8 to 3.0% by weight.

6. Polyamide moulding composition according to any of the preceding claims, **characterized in that** the proportion of (b) is in the range from 15 to 35% by weight, preferably in the range from 20 to 35% by weight, particularly preferably in the range from 22 to 33% by weight.

7. Polyamide moulding composition according to any of the preceding claims, **characterized in that** the proportion of (b) is constituted of
(b1) a proportion of from 10 to 35% by weight of macromolecular plasticizer, preferably a proportion of from 15 to 30% by weight, or of 20-35 % by weight, particularly preferably a proportion of from 17 to 27% or 22-33 % by weight, and
(b2) a proportion of from 5 to 20% by weight of low-molecular-weight plasticizer, preferably a proportion of from 5 to 15% by weight, particularly preferably a proportion of from 7 to 15% by weight,
or that the proportion (b) comprises a proportion of from 10 to 40% by weight of exclusively macromolecular plasticizer, preferably a proportion of from 15 to 35% by weight or from 20 to 35% by weight, particularly preferably a proportion of from 22 to 33% by weight.

8. Polyamide moulding composition according to any of the preceding claims, **characterized in that** its melting point is below 275°C or below 270°C, preferably at most 265°C, where the melting point is preferably in the range from 240 to 270°C, particularly in the range from 250 to 265°C.

9. Polyamide moulding composition according to any of the preceding claims, **characterized in that** its water absorption at 95°C and 336 h is at most 3.5%, preferably at most 3%, and/or its tensile strain at break, measured on tensile specimens, is at least 5%, and/or its tensile modulus of elasticity is in the range from 400 to 1600 MPa, preferably in the range from 500 to 1500 MPa.

10. Polyamide moulding composition according to any of the preceding claims, **characterized in that** it is composed of
(a) from 64 to 80% by weight of a copolyamide composed of
(a1) from 15 to 25 mol% of 1,6-hexanediamine and from 75 to 85 mol% of 1,10-decanediamine,
(a2) from 75 to 85 mol% of terephthalic acid and from 15 to 25 mol% of dodecanedioic acid,
(b) from 15 to 35% by weight of a macromolecular g-MAH plasticizer based on ethylene-propylene copolymer, if appropriate with replacement of up to half by a low-molecular-weight plasticizer, in particular based on an N-alkylbenzene-sulphonamide,
(c) from 0.8 to 3.0% by weight of additives.

11. Polyamide moulding composition according to any of the preceding claims, **characterized in that** the macromolecular plasticizer is selected from the group of ethylene-α-olefin copolymer, terpolymer based on ethylene-C3-12-α-olefin with an unconjugated diene, ethylene-acrylate copolymer, ethylene-butylene copolymer, and/or mixtures thereof, where the macromolecular plasticizer preferably has constituents having anhydride groups, in particular in the form of a maleic anhydride graft (g-MAH), where the macromolecular plasticizer has particularly preferably been selected from maleic-anhydride-modified ethylene-propylene copolymer.

12. Polyamide moulding composition according to any of the preceding claims, **characterized in that** the low-molecular-weight plasticizer has been selected from the group of: N-butylbenzenesulphonamide, N-octylbenzenesulphonamide, N-cyclohexylbenzenesulphonamide, N-ethyltoluenesulphonamide, and/or mixtures thereof, preference being here to the use of N-alkylbenzenesulphonamides and of p-toluenesulphonamide.

13. Polyamide moulding composition according to any of the preceding claims, **characterized in that** the additive or, respectively, the added substances have been selected from the group of: crystallization accelerators or crystallization retarders, flow aids, lubricants, mould-release agents, pigments, dyes and markers, stabilizers, processing aids, antistatic agents, nanoparticles in lamellar form, conductivity additives, such as carbon black, graphite powder or carbon nanofibrils, flame retardants, in particular halogen-free flame retardants, particular examples being those that are phosphinic-salt-based, residues from polymerization processes, examples being catalysts, salts and derivatives of these, and also regulators, examples being monoacids and monoamines.

14. Mouldings produced from a polyamide moulding composition according to any of the preceding claims, preferably in the form of a liquid container or of a liquid line, in particular for the automobile sector for conducting liquids, where preferred examples are fuels, coolants, urea or solutions thereof, and/or oils, where this is preferably a pipeline, preferably with a tensile strain at break of at least 100%.

15. Process for producing a moulding according to Claim 14, **characterized in that** the moulding is produced in an extrusion process, preferably with use of a screw extruder, at a barrel temperature in the range from 280 to 320°C, particularly preferably to give a pipeline.

## Revendications

1. Masse de moulage en polyamide présentant la composition suivante :
(a) 40-90% en poids d'un copolyamide, celui-ci étant constitué par
(a1) de la 1,6-hexanediamine et de la 1,10-décanediamine ainsi que par
(a2) de l'acide téréphtalique et au moins un autre monomère formant du polyamide, choisi dans le groupe : acide isophtalique (IPS), acide naphtalènedicarboxylique (NDS), acide subérique (C8), acide azélaïque (C9), acide sébacique (C10), acide undécanedioïque (C11), acide dodécanedioïque (C12), acide brassylique (C13), acide tétradécanedioïque (C14), acide pentadécanedioïque (C15), acide hexadécanedioïque (C16), acide heptadécanedioïque (C17), acide octadécanedioïque (C18), acide cis-cyclohexane-1,4-dicarboxylique et/ou trans-cyclohexane-1,4-dicarboxylique, acide cis-cyclohexane-1,3-dicarboxylique et/ou trans-cyclohexane-1,3-dicarboxylique (CHDA) et/ou leurs mélanges ;
(b) 10-40% en poids de plastifiants macromoléculaires sous forme d'homopolymères polyoléfiniques ou de copolymères polyoléfiniques, à condition que ces plastifiants puissent être remplacés partiellement par des plastifiants de bas poids moléculaire choisis dans le groupe : ester octylique de l'acide p-hydroxybenzoïque, amide de l'acide benzènesulfonique, N-alkylamides de l'acide benzènesulfonique, les radicaux alkyle comprenant au total 1 à 20 atomes de carbone, amide de l'acide toluènesulfonique, N-alkylamides de l'acide toluènesulfonique, les groupes alkyle comprenant 1 à 20 atomes de carbone et/ou leurs mélanges ;
(c) 0-20% en poids d'additifs et/ou d'adjuvants.

2. Masse de moulage en polyamide selon la revendication 1, **caractérisée en ce que**, dans (a1), la proportion de 1,6-hexanediamine représente 10-40% en mole et la proportion de 1,10-décanediamine représente 60-90% en mole et que, dans (a2), la proportion d'acide téréphtalique représente 60-90% en mole et la proportion d'autres monomères formant du polyamide représente 10-40% en mole et où, de préférence, dans (a1), la proportion de 1,6-hexanediamine représente 15-35% en mole et la proportion de 1,10-décanediamine représente 65-85% en mole et, dans (a2), la proportion d'acide téréphtalique représente 65-85% en mole et la proportion d'autres monomères formant du polyamide représente 15-35% en mole.

3. Masse de moulage en polyamide selon l'une quelconque des revendications précédentes, **caractérisée en ce que**, dans (a1), la proportion de 1,6-hexanediamine représente 15-30 ou 15-25% en mole et la proportion de 1,10-décanediamine représente 70-85 ou 75-85% en mole, et que, dans (a2), la proportion d'acide téréphtalique représente 75-85% en mole et la proportion d'autres monomères formant du polyamide représente 15-25% en mole.

4. Masse de moulage en polyamide selon l'une quelconque des revendications précédentes, **caractérisée en ce que** l'acide dicarboxylique comprenant 8-18 atomes de carbone est choisi dans le groupe formé par l'acide isophtalique, l'acide sébacique (C10), l'acide undécanedioïque (C11) et l'acide dodécanedioïque (C12), et ce dernier étant préféré.

5. Masse de moulage en polyamide selon l'une quelconque des revendications précédentes, **caractérisée en ce que** la proportion de (a) se situe dans la plage de 60-85% en poids, de préférence dans la plage de 64-80% en poids, et **en ce que**, de préférence, la proportion de (c) se situe dans la plage de 0,5-5,0% en poids, en particulier de préférence dans la plage de 0,8-3,0% en poids.

6. Masse de moulage en polyamide selon l'une quelconque des revendications précédentes, **caractérisée en ce que** la proportion de (b) se situe dans la plage de 15-35% en poids, de préférence dans la plage de 20-35% en poids, en particulier de préférence dans la plage de 22-33% en poids.

7. Masse de moulage en polyamide selon l'une quelconque des revendications précédentes, **caractérisée en ce que** la proportion de (b) est composée de (b1)
plastifiants macromoléculaires en une proportion de 10-35% en poids, de préférence en une proportion de 15-30% en poids ou de 20-35% en poids, en particulier de préférence en une proportion de 17-27% en poids ou de 22-33% en poids, et
(b2) plastifiants de bas poids moléculaire en une proportion de 5-20% en poids, de préférence en une proportion de 5-15% en poids, en particulier de préférence en une proportion de 7-15% en poids
ou **en ce que** la proportion de (b) contient exclusivement des plastifiants macromoléculaires en une proportion de 10-40% en poids, de préférence en une proportion de 15-35 ou de 20-35% en poids, en particulier de préférence en une proportion de 22-33% en poids.

8. Masse de moulage en polyamide selon l'une quelconque des revendications précédentes, **caractérisée en ce qu'**elle présente un point de fusion inférieur 275°C ou inférieur à 270°C, de préférence d'au plus 265°C, le point de fusion étant de préférence situé dans une plage de 240-270°C, en particulier de préférence dans une plage de 250-265°C.

9. Masse de moulage en polyamide selon l'une quelconque des revendications précédentes, **caractérisée en ce qu'**elle présente une absorption d'eau, à 95°C et à 336 h, d'au plus 3,5%, de préférence d'au plus 3% et/ou un allongement à la déchirure, mesuré sur des éprouvettes de traction, d'au moins 5%, et/ou un module de traction E dans la plage de 400-1600 MPa, de préférence dans la plage de 500-1500 MPa.

10. Masse de moulage en polyamide selon l'une quelconque des revendications précédentes, **caractérisée en ce qu'**elle est constituée par
(a) 64-80% en poids d'un copolyamide, constitué par (a1)
15-25% en mole de 1,6-hexanediamine et 75-85% en mole de 1,10-décanediamine,
(a2) 75-85% en mole d'acide téréphtalique et 15-25% en mole d'acide dodécanedioïque,
(b) 15-35% en poids d'un plastifiant macromoléculaire g-MAH à base d'un copolymère d'éthylène-propylène, le cas échéant remplacé jusqu'à la moitié par un plastifiant de bas poids moléculaire, en particulier à base d'un N-alkylamide de l'acide benzènesulfonique
(c) 0,8-3,0% en poids d'additifs.

11. Masse de moulage en polyamide selon l'une quelconque des revendications précédentes, **caractérisée en ce que** le plastifiant macromoléculaire est choisi dans le groupe : copolymère d'éthylène-α-oléfine, terpolymère à base d'éthylène-C3-12-α-oléfine avec un diène non conjugué, copolymère d'éthylène-acrylate, copolymère d'éthylène-butylène et/ou leurs mélanges, le plastifiant macromoléculaire disposant de préférence de constituants présentant des groupes anhydride d'acide, en particulier sous forme d'un anhydride d'acide maléique greffé (g-MAH), le plastifiant macromoléculaire étant choisi en particulier de préférence sous forme de copolymère d'éthylène-propylène modifié par de l'anhydride d'acide maléique.

12. Masse de moulage en polyamide selon l'une quelconque des revendications précédentes, **caractérisée en ce que** le plastifiant de bas poids moléculaire est choisi dans le groupe : N-butylamide de l'acide benzènesulfonique, N-octylamide de l'acide benzènesulfonique, N-cyclohexylamide de l'acide benzènesulfonique, N-éthylamide de l'acide toluènesulfonique et/ou leurs mélanges ; le N-alkylamide de l'acide benzènesulfonique et l'amide de l'acide p-toluènesulfonique étant utilisés de préférence.

13. Masse de moulage en polyamide selon l'une quelconque des revendications précédentes, **caractérisée en ce que** l'additif ou, selon le cas, les adjuvants sont choisis dans le groupe : accélérateurs ou retardateurs de cristallisation, adjuvants d'écoulement, lubrifiants, agents de démoulage, pigments, colorants et marqueurs, stabilisateurs, adjuvants de transformation, antistatiques, nanoparticules sous forme de plaquettes, additifs de conductibilité, tels que la suie, la poudre de graphite ou les nanofibrilles de carbone, agents ignifuges, en particulier les agents ignifuges exempts d'halogène, comme en particulier à base de sels de l'acide phosphinique, résidus de procédés de polymérisation, tels que les catalyseurs, les sels et leurs dérivés, ainsi qu'agents de régulation, tels que les monoacides, les monoamines.

14. Corps moulé fabriqué à partir d'une masse de moulage en polyamide selon l'une quelconque des revendications précédentes, de préférence sous forme d'un récipient pour liquide ou d'une conduite pour liquide, en particulier dans le domaine automobile pour guider des liquides tels que de préférence des carburants, des réfrigérants, de l'urée ou ses solutions et/ou des huiles, où il s'agit de préférence d'une conduite tubulaire, présentant de préférence un allongement à la rupture d'au moins 100%.

15. Procédé pour la fabrication d'un corps moulé selon la revendication 14, **caractérisé en ce que** le corps moulé est fabriqué dans un procédé d'extrusion, utilisant de préférence une extrudeuse à vis à une température du cylindre dans la plage de 280-320°C, en particulier de préférence sous forme d'une conduite tubulaire.
